# EUROPÄISCHE PATENTANMELDUNG

(11) **EP 4 105 429 A1**
(43) Veröffentlichungstag der Anmeldung: **21.12.2022**
(21) Anmeldenummer: 21179875.6
(22) Anmeldetag: 16.06.2021
(51) Int. Cl.: E06B 3/20, B29C 48/00

(54) **KOEXTRUSIONSPROFIL, VERFAHREN ZUM HERSTELLEN EINES KOEXTRUSIONSPROFILS UND TÜR- UND/ODER FENSTERSYSTEM**

(71) Anmelder: Salamander Industrie-Produkte GmbH, 86842 Türkheim (DE)
(72) Erfinder: Schmiedeknecht, Till, 80992 München (DE)
(74) Vertreter: Schmid, Nils T.F.

(57) **Zusammenfassung**

Die vorliegende Erfindung betrifft ein Koextrusionsprofil für ein Fenster- und/oder Türteil, insbesondere ein Fenster- und/oder Türrahmenteil, ein Fenster- und/oder Türflügelteil, beispielsweise ein Schiebefenster oder eine Schiebetür, oder ein an ein Fenster- und/oder Türteil anzubringendes Nebenprofil umfassend ein, eine Außenseite des Koextrusionsprofils bildendes Hohlprofil mit einer Hohlprofilwand aus Kunststoff und einen in dem Hohlprofil aufgeschäumten Schaumstoffkern aus Kunststoff sowie ein Extrusionsverfahren und ein Extrusionswerkzeug zum Herstellen eines Koextrusionsprofils.

## Beschreibung

Die vorliegende Erfindung betrifft ein Koextrusionsprofil aus Kunststoff, wie PVC, für ein Tür- und/oder ein Fenstersystem beispielweise eines Passivhauses. Des Weiteren betrifft die vorliegende Erfindung auch ein Verfahren sowie ein Extrusionswerkzeug zum Herstellen eines Koextrusionsprofils. Ferner stellt die vorliegende Erfindung ein Tür- und/oder ein Fenstersystem mit einem Koextrusionsprofil bereit.

Üblicherweise weisen PVC-Extrusionsprofile für Fenster und/oder Türen sowohl eine Stahlversteifung aus Statikgründen und zur Ermöglichung der Verschraubung von Beschlägen als auch eine Dämmstofffüllung entweder aus PS oder EPS auf, um einen guten Wärmedurchgangskoeffizient (U-Wert) zu erreichen. Beispielsweise werden rollverformte Stahlprofile eingesetzt, welche auf der einen Seite der Statik der Fenster und gleichzeitig als Schraubgrundlage für die Beschläge dienen. Um einen deutlich verbesserten U-Wert zu erreichen, ist es notwendig, Dämmmaterial aus PS- oder EPS-Schaumstoff in die Hohlkammern der Extrusionsprofile einzubringen. Beispielsweise werden die Dämmmaterialen in die Stahlversteifungen in den Hohlkammern der Extrusionsprofile eingeschoben oder vollständig ausgeschäumt, sodass der Schaumstoff eine feste Verbindung mit dem Extrusionsprofil eingeht. Der Einsatz von Stahlprofilen ist außerdem insofern erforderlich, als diese als Gegenlager für die Verschraubung im Mauerwerk und der Beschläge dienen.

DE102008009495A1 offenbart ein derartiges bekanntes PU-Fensterrahmenprofil mit einer Hohlkammer und einem diese vollständig ausfüllenden Schaumstoff-Dämmmaterial. In den Dämmstoff sind zusätzliche Verstärkungselemente in Form von stabilitätserhöhenden Fasereinlagen, Rohren aus Kunststoff oder einem Faserverbundmaterial oder eines Beschlagteils zur Gewährleistung der erforderlichen mechanischen Stabilität des Fensterrahmenprofils eingebracht. Die Verstärkungselemente werden bereits beim Schäumen des Schaumstoff-Dämmmaterials in das Formwerkzeug gelegt und von dem Schaumstoff umspritzt. Anschließend wird das mit dem Verstärkungselement versteifte Schaumstoff-Dämmmaterial in einem Spritzgießvorgang von einer starren Polyurethan-Umhüllung umspritzt. Nachteilig an den bekannten Extrusionsprofilen sind die aufwendige Herstellung sowie die hohe Komponentenzahl, um zum einen eine ausreichende Festigkeit bzw. Steifigkeit der Extrusionsprofile sowie zum anderen eine ausreichende Dämmwirkung sicherzustellen.

Es ist Aufgabe der vorliegenden Erfindung, die Nachteile aus dem bekannten Stand der Technik zu verbessern, insbesondere ein einfacher und/oder mit weniger Komponenten herzustellendes Extrusionsprofil bereitzustellen das insbesondere eine höhere Steifigkeit und/oder eine bessere Dämmwirkung besitzt.

Diese Aufgabe wird durch die Merkmale der unabhängigen Ansprüche gelöst.

Danach ist ein Koextrusionsprofil für ein Fenster- und/oder Türteil, insbesondere ein Fenster- und/oder Türrahmenteil, ein Fenster- und/oder Türflügelteil, beispielsweise ein Schiebefenster oder eine Schiebetür, oder ein an ein Fenster- und/oder Türteil anzubringendes Nebenprofil, beispielsweise eines Passivhauses, bereitgestellt. Das Koextrusionsprofil ist durch eine Extrusionsrichtung definiert, die die Längsrichtung des Koextrusionsprofils festlegt, in welche sich das Koextrusionsprofil im Querschnitt im Wesentlichen nicht ändert. Die erfindungsgemäßen Koextrusionsprofile können beispielsweise für Tür- und/oder Fenstersysteme eingesetzt werden, die einen Tür- und/oder Fensterprofilrahmen, beispielsweise ein Rahmenprofil eines verschwenkbaren oder linear verschiebbaren Schiebeflügels, ein Rahmenprofil eines ortsfesten sogenannten Standflügels, eines Stulpflügels oder eines Pfostens, ein Profilrahmen von Tür- und/oder Fensterrahmen in Gebäudewandeinfassungen, wie ein Zargenprofil, oder ergänzende Rahmenteile, wie beispielsweise ein Futterleistenprofil oder ein Stulpprofil bilden.

Erfindungsgemäß umfasst das Koextrusionsprofil ein eine Außenseite des Koextrusionsprofils bildendes Hohlprofil mit einer Hohlprofilwand aus Kunststoff, beispielsweise aus PVC, und einen in dem Hohlprofil aufgeschäumten Schaumstoffkern aus Kunststoff, beispielsweise aus PET. Mit anderen Worten sind das Hohlprofil und der Schaumstoffkern koextrudiert. Dabei kann aufgeschmolzenes Kunststoffmaterial zur Bildung des Schaumstoffkerns innerhalb des Hohlprofils, insbesondere gleichzeitig mit der Extrusion der Hohlprofilwand, aufgeschäumt werden. Der Schaumstoffkern kann sich dabei innerhalb der Hohlprofilwand expandieren und auf diese Weise schon während der Herstellung der Hohlprofilwand hergestellt werden, insbesondere simultan. Beispielsweise kann das Aufschäumen des Schaumstoffkerns so auf die Extrusion der Hohlprofilwand abgestimmt sein, dass die Hohlprofilwand bereits etwas abgekühlt ist. Mit anderen Worten kann die Koextrusion zwar simultan erfolgen, aber mit einem zeitlichen Versatz in Bezug auf das Abgeben des jeweiligen Materials von Hohlprofilwand und Schaumstoffkern insbesondere mittels der Koextrusionsdüse und/oder mittels zweier aufeinander abgestimmter Extrusionsdüsen. Durch die Koextrusion von Schaumstoffkern und Hohlprofil geht eine besonders formgenaue Verbindung von Schaumstoffkern und Hohlprofil einher. Als Verbindung ist dabei nicht notwendigerweise eine stoffschlüssige Verbindung von Schaumstoffkern und Hohlprofil zu verstehen, sondern grundsätzlich eine Anordnung des Schaumstoffkerns innerhalb des Hohlprofils. Das Aufschäumen des Schaumstoffkerns innerhalb des Hohlprofils kann dazu führen, dass sich der Schaumstoffkern insbesondere formgenau und/oder formanpassend an die Innenseite des Hohlprofils anschmiegt. Beispielsweise kann das Aufschäumen des Schaumstoffkerns innerhalb des Hohlprofils so erfolgen, dass eine Relativbewegung von Schaumstoffkern und Hohlprofil quer zur Extrusionsrichtung von höchstens 1,5 mm, insbesondere von höchstens 1 mm oder von höchstens 0,5 mm, vorzugsweise ausgeschlossen ist, zugelassen ist. Beispielsweise kann die Koextrusion so eingestellt sein, insbesondere das Extrudieren des Hohlprofils und das Extrudieren des Schaumstoffkerns zu dessen Expansion so auf einander abgestimmt sein, dass wenigstens im Bereich der einander zugewandten Grenzflächen von Schaumstoffkern und Hohlprofil eine materialschlüssige Verbindung einhergeht. Ein Vorteil der Koextrusion besteht darin, dass es möglich ist, auf herstellungstechnisch einfache Art und Weise beliebige Profilquerschnitte herzustellen. Durch das Aufschäumen des Schaumstoffkern-Materials innerhalb des Hohlprofils ist es möglich, für beliebige Querschnitte der Hohlprofils einen Schaumstoffkern herzustellen. Der Schaumstoff kern wirkt als Dämmmaterial, insbesondere um einen gewünschten U-Wert zu erreichen. Ein wesentlicher Vorteil des erfindungsgemäßen Koextrusionsprofils besteht darin, dass es besonders kostengünstig herstellbar ist und /oder verbesserte Kennwerte, wie Gewicht, Festigkeit und U-Wert, aufweist.

Beispielsweise kann die Koextrusion derart erfolgen, dass keine Spaltbereiche zwischen der Außenkontur des Schaumstoffkerns zu der Innenkontur der Hohlprofilwand vorliegen. Dies kann beispielsweise durch die Dosierung der Schaumstoffmenge erreicht werden, insbesondere durch dessen Erhöhung, sodass das von dem Hohlprofil begrenzte Volumen vollständig, d. h. zu wenigstens 90 %, 95 % oder wenigstens 99 %, ausgefüllt ist. Die dem Hohlprofil zugewandte Außenkontur-Oberfläche des Schaumstoffkerns, also dessen Grenzfläche, ist frei von mechanischen Nachbearbeitungs- und/oder Handlingspuren. Die einander zugewandten Grenzflächen von Hohlprofil und Schaumstoffkern haben einander angepasste Oberflächenstrukturen. Durch das Ausschäumen des Schaumstoffs innerhalb des Hohlprofils bei der Koextrusion beeinflusst das Hohlprofil die Dichte und die Oberfläche des Schaumstoffkerns und dessen Schaumstruktur.

Bei der Herstellung eines erfindungsgemäßen Koextrusionsprofils können die Hohlprofilwand und der Schaumstoffkern gleichzeitig in einem Prozessschritt mittels Koextrusion hergestellt werden. Um die Hohlprofilwand und den Schaumstoffkern gleichzeitig zu erzeugen, kann aufgeschmolzenes Kunststoff-Granulat und/oder Kunststoff-Recyclat zur Bildung des Schaumstoffkerns während der Extrusion der Hohlprofilwand aus aufgeschmolzenem Kunststoffmaterial, in das Hohlprofil extrudiert und dort aufgeschäumt werden. Vorzugsweise kann für die Extrusion der Hohlprofilwand und des Schaumstoffkerns dasselbe Extrusionswerkzeug verwendet werden. Auf diese Weise können die Hohlprofilwand und der Schaumstoffkern gleichzeitig in einem Prozessschritt mit demselben Extrusionswerkzeug hergestellt werden.

Der Schaumstoffkern kann chemisch unter Hinzugabe von anorganischen Treibmitteln und Nukleierungsmitteln, wie zum Beispiel Talkum (H2Mg3O2Si4) mit einem Molekulargewicht von 397,27, Natriumbikarbonat (NaHCO3 / CHNaO3), auch als Natriumhydrogenkarbonat bezeichnet, mit einem Molekulargewicht von 84,007 und einer monoisotropen Masse von 83,98, oder Ammoniumkarbonat (CH8N2O3) aufgeschäumt werden. Das Natriumbikarbonat kann ein Mononatriumsalz der Kohlensäure mit alkalinisierenden Eigenschaften sein, das als kristallines Pulver oder in Agglomeraten verwendet werden kann. Die anorganischen Treibmittel und Nukleierungsmittel zersetzen sich bei Erhitzung im Extruder und setzen Gase frei, die das Aufschäumen des aufgeschmolzenen Kunststoffs ermöglichen. Beispielsweise Natriumbikarbonat zerfällt beim Erhitzen über 50 °C, wobei Co2, H2O und Na2Co3 freigesetzt werden, mit vollständiger Zersetzung bei 270 °C. Hierbei kann beispielsweise mit 4,4-Oxybis (Benzolsulfonylhyrazid) der Zerfall gesteuert werden. Ammoniumkarbonat kann in Pulverform eingesetzt werden und weist ein Molekulargewicht von 96,09 und eine monoisotrope Masse von 96,053 auf. Es zerfällt bei Erhitzung unter Bildung von Ammoniak und CO2. Alternativ oder zusätzlich kann 5-(1-Pentylterazol-5-yl) -Benzol-1,3-diamin (C12H18N6) mit einem Molekulargewicht von 246,31 verwendet werden. Alternativ oder zusätzlich zu den anorganischen Treibmitteln und Nukleierungsmitteln können organische Treibmittel und Nukleierungsmittel verwendet werden wie beispielsweise Azodicarbonamid ADC (C2N4H4O2) mit einem Synonym von Azodicaboxamid und Azobisformamid, einem Molekulargewicht von 116,08 und einer Zersetzungstemperatur von 225 °C. Alternativ oder zusätzlich zu den anorganischen und/oder organischen Treibmitteln und Nukleierungsmitteln kann auch physikalisch mittels hochkomprimierter Gase, wie beispielsweise CO₂ oder N₂ im Hochdruckverfahren oder Ethanol, Pentan, Butan im Niederdruckverfahren, aufgeschäumt werden. Des Weiteren ist es denkbar, den Schäumvorgang bei der Herstellung des Schaumstoffkerns mit sogenannten Microspheren durchzuführen, die als in Acrylat-Hohlkügelchen eingeschlossene leicht siedende Flüssigkeiten, wie IsoButan, -Pentan, -Oktan oder dergleichen, bezeichnet werden können und welche wie chemische Treibmittel direkt in das Kunststoff-Granulat oder Kunststoff-Recyclat dosiert werden können. Um das Schäumverhalten des Kunststoff-Granulats oder Kunststoff-Recyclats zu verbessern, den Zerfall bzw. das Platzen von Schaumblasen im Prozess zu reduzieren und ein extrusionsfähiges Verhalten der Kunststoffschmelze zu erzeugen, können Kettenverlängerungsmittel zur Steigerung der intrinsischen Viskosität der Kunststoffschmelze, sogenannte Chain-Extender, in den Extrusionsvorgang eingebracht werden. Als Chain-Extender können organische oder anorganische Zusätze oder Polymere verwendet werden. Als Chain-Extender kann beispielsweise Pyromellitic Dianhydride (PMDA), Diisocyanat, Diepoxid, 1,6-Diisocyanatohexan, 1,4-Butanediol Diglycidylether (EPOX), 1,4-Phenylene-Bis-Oxazoline (PBO), 1,4- Phenylene-Diisocyanat (PDI) und/oder Triphenyl-Phosphit (TPP) verwendet werden.

Gemäß einer beispielhaften Ausführung eines erfindungsgemäßen Koextrusionsprofils schäumt der Schaumstoffkern das Hohlprofil im Wesentlichen vollständig aus. Alternativ oder zusätzlich ist das Hohlprofil frei von Hohlkammern bildenden Innenstegen ausgebildet. Die Hohlprofilwand kann also eine im Querschnitt beliebig gestaltbare geschlossene Hohlwandstruktur bilden, die einen einzigen Vollhohlraum begrenzt, der im Wesentlichen vollständig mit aufgeschäumtem Schaumstoffkernmaterial belegt ist. Derartige Koextrusionsprofile sind somit deutlich weniger komplex als bislang im Stand der Technik bekannte Profile mit komplexen Innenstrukturen und Innenstegen, die nur mit aufwendigen und teuren Werkzeugen herstellbar waren. Die erfindungsgemäßen Koextrusionsprofile lassen sich im Gegensatz dazu mit kostengünstigen Werkzeugen herstellen.

In einer weiteren beispielhaften Ausführung der vorliegenden Erfindung expandiert sich der Schaumstoffkern beim Aufschäumen derart, dass er fest an der Hohlprofilwand anliegt und/oder kraftschlüssig daran befestigt ist. Durch die beispielsweise temperaturabhängige Expansion des Schaumstoffkerns kann der Schaumstoffkern flächenbündig an einer Innenseite der Hohlprofilwand anliegen und es kann eine ausreichend hohe Halte- bzw. Befestigungskraft zwischen dem Schaumstoffkern und der Hohlprofilwand sichergestellt werden. Beispielsweise kann der Schaumstoffkern in Umfangsrichtung betrachtet vollständig an der Hohlprofilwand anliegen. Bevorzugt verkeilt sich der Schaumstoffkern durch die Expansion mit der Hohlprofilwand. Durch eine derartige Befestigung des Schaumstoffkerns und der Hohlprofilwand kann verhindert werden, dass sich der Schaumstoffkern in Extrusionsrichtung innerhalb des Hohlprofils verschiebt. Ein zusätzliches Verkleben des Schaumstoffkerns mit der Hohlprofilwand oder zusätzliche Verbindungselemente sind demnach nicht notwendig. Auf diese Weise wird eine herstellungstechnisch einfache und kostengünstige Aneinanderbefestigung, insbesondere Verbindung, des Schaumstoffkerns mit der Hohlprofilwand ermöglicht.

In einer weiteren beispielhaften Ausführung steht von einer Innenseite der Hohlprofilwand wenigstens eine sich in Extrusionsrichtung erstreckende Rippe vor. Die Rippe ragt ins Innere des Hohlprofils hinein und ist, vorzugsweise vollständig, vom Schaumstoffkern umschäumt. Die umschäumte Rippe unterstützt eine drehfeste Anordnung des Schaumstoffkerns innerhalb des Hohlprofil des. Ferner kann durch die Rippe die Kraftübertragung auf den Schaumstoffkern verbessert werden, indem der Kontaktbereich zwischen dem Schaumstoffkern und der Hohlprofilwand erhöht wird. Auf diese Weise kann die strukturelle Festigkeit der Verbindung verbessert werden. Die Rippe kann beim Extrudieren der Hohlprofilwand zusammen mit der Hohlprofilwand extrudiert werden, so dass keine zusätzlichen Fertigungs- oder Bearbeitungsschritte nötig sind.

In einer beispielhaften Weiterbildung ist an einer Innenseite der Hohlprofilwand wenigstens ein sich in Extrusionsrichtung erstreckender Verankerungsvorsprung ausgebildet. Alternativ oder zusätzlich ist an der Innenseite der Hohlprofilwand eine sich in Extrusionsrichtung erstreckende Verankerungsvertiefung ausgebildet. Der wenigstens eine Verankerungsvorprung und/oder die wenigstens eine Verankerungsvertiefung stehen von der Innenseite der Hohlprofilwand hervor und sind widerhakenartig in dem Schaumstoffkern verankert. Der Verankerungsvorsprung und/oder die Verankerungsvertiefung erhöhen ebenfalls den Kontaktbereich zwischen dem Schaumstoffkern und der Hohlprofilwand und verbessern somit ebenfalls die Kraftübertragung zwischen Schaumstoffkern und Hohlprofilwand, was zu einer höheren strukturellen Festigkeit der Verbindung führt. Der Verankerungsvorsprung und/oder die Verankerungsvertiefung kann/können ebenfalls beim Extrudieren der Hohlprofilwand zusammen mit der Hohlprofilwand extrudiert werden, so dass keine zusätzlichen Fertigungs- oder Bearbeitungsschritte nötig sind. Die Kraftübertragung zwischen Verankerungsvorsprung bzw. Verankerungsvertiefung und Schaumstoffkern kann dabei quer, insbesondere senkrecht, zur Extrusionsrichtung orientiert sein.

In einer beispielhaften Weiterbildung weist der wenigstens eine Verankerungsvorprung und/oder die wenigstens eine Verankerungsvertiefung einen C-, T- oder L-förmigen Querschnitt auf. Alternativ oder zusätzlich ist der wenigstens eine Verankerungsvorprung vollständig von dem Schaumstoffkern umschäumt und/oder die wenigstens eine Verankerungsvertiefung ist vollständig vom Schaumstoffkern ausgeschäumt.

In einer weiteren beispielhaften Ausführung umfasst die Hohlprofilwand PVC und/oder eine Wandstärke im Bereich von 0,2 mm bis 6 mm, insbesondere im Bereich von 0,3 mm bis 5 mm oder im Bereich von 0,4 mm bis 4,5 mm.

Gemäß einer weiteren beispielhaften Ausführung ist der Schaumstoffkern aus einem Kunststoff mit einer mittleren Dichte im Bereich von 80 kg/m³ bis 250 kg/m³, insbesondere im Bereich von 100 kg/m³ bis 200 kg/m³, Bereich von 110 kg/m³bis 150 kg/m³, im Bereich von 110 kg/m³ bis 130 kg/m³ oder von etwa 115 kg/m³, beispielsweise aus PET, hergestellt.

Die Kombination aus einem PET-Schaumstoffkern und einer Kunststoff-Hohlprofilwand, beispielsweise aus PVC, hat sich insofern als vorteilhaft erwiesen, als der Schaumstoffkern aus PET Druckkräfte aufnimmt während die Kunststoff-Hohlprofilwand Zugkräfte aufnimmt. Insofern funktioniert das Koextrusionsprofil ähnlich wie ein Fachwerksträger. Der PET-Schaumstoffkern weist außerdem eine ausreichende Widerstandskraft gegen ein Herausziehen und/oder Herausreißen einer Verschraubung auf.

Beispielsweise besitzt der Schaumstoffkern eine Druckfestigkeit von mindestens 0,3 N/mm², insbesondere von mindestens 0,5 N/mm², 0,75 N/mm², 1,0 N/mm², 1,25 N/mm² oder von mindestens 1,5 N/mm².

Zur Bestimmung der Druckfestigkeit kann das Standardtestverfahren gemäß ASTM D1621 angewendet werden, mittels dem die Druckeigenschaften von harten Schaumstoffen, insbesondere von Hartschaum-Kunststoff, bestimmt und getestet werden können. Ein wesentlicher Vorteil des Einsatzes eines PET-Schaumstoffkerns besteht darin, dass auf weitere Versteifungsmaßnahmen, wie die üblicherweise in die Hohlkammern eingesetzten Stahlversteifungen, verzichtet werden kann. Damit gehen weitere erhebliche Vorteile einher: reduziertes Gewicht und damit Kosten, insbesondere Frachtkosten, sowie eine einfachere Montage. Insbesondere der Einsatz eines PET-Schaumstoffkerns hat sich als besonders vorteilhaft für den Einsatz in gattungsgemäßen Koextrusionsprofilen für Tür- und/oder Fenstersysteme beispielsweise in einem Passivhaus herausgestellt. Im Allgemeinen handelt es sich bei dem PET-Schaumstoffkern um einen thermoplastischen Schaumwerkstoff mit hohen mechanischen und thermischen Eigenschaften sowie hoher Resistenz gegenüber Feuchtigkeit. Dadurch kann das Koextrusionsprofil die Anforderungen an Statik und Festigkeit erfüllen. Ferner zeichnet sich der PET-Schaumstoffkern durch hohe Wärmedämmungseigenschaften und ein gutes Brandverhalten aus, so dass vor allem Passivhäuser einen guten Dämmwert erzielen können.

In einer weiteren beispielhaften Ausführungsform umfasst der Kunststoff der Hohlprofilwand und/oder des Schaumstoffkerns Kunststoff-Recyclingmaterial, wobei insbesondere Kunststoff-Recyclingmaterial ein Gemisch ist, welches ein Alt-Fenster-Granulat oder -Mahlgut beispielsweise aus Produktionsabfällen der Fenster- und/oder Profilproduktion umfasst, wobei das Alt-Fenster-Granulat oder -Mahlgut einen Masseanteil zwischen 50 Gew.-% und 100 Gew.-% des Gemisches, insbesondere zwischen 80 Gew.-% und 98 Gew.-% des Gemisches, zwischen 90 Gew.-% und 97 Gew.-% des Gemisches oder etwa 95 Gew.-% des Gemisches, aufweist.

"Alt-Fenster-Granulat" im Sinne dieser Erfindung bezeichnet ein Gemisch, welches aus alten, zuvor bereits verbauten Kunststoffrahmen besteht, die nach dem Einsatz erneut verwertet werden, und/oder aus Kunststoffmaterial besteht, welches im Rahmen des Verarbeitungsprozesses beispielsweise beim Fensterhersteller oder beim Ausbau der alten Fenster anfällt. Im Sinne dieser Erfindung können die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, bei der Verarbeitung zum Alt-Fenster-Granulat miteinander vermischt werden. Die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, können auch separat vorliegen. Beispielsweise wird im Sinne dieser Erfindung ein Kunststoff-Recyclingmaterial für ein erfindungsgemäßes Koextrusionsprofil verwendet. Ein Koextrusionsprofil aus einem Kunststoff-Recyclingmaterial ist insbesondere deshalb vorteilhaft, da dieses für die Umwelt von Vorteil ist und es sich hierbei um ein CO2-neutrales Produkt handelt.

In einer weiteren beispielhaften Ausführung eines erfindungsgemäßen Koextrusionsprofils nimmt die Dichte des Schaumstoffkerns von dessen Zentrum nach außen kontinuierlich zu, es besteht also ein Dichtegradient von innen nach außen. Die randnahe Dichte kann dabei wenigstens doppelt, insbesondere dreimal, viermal oder fünfmal, so groß sein, wie die Dichte im Bereich des Zentrums. Die erhöhte Dichte im Randbereich kann beispielsweise infolge einer Begrenzung der Expansion des Schaumstoffkerns durch die Hohlprofilwand entstehen. Die Dichte im Randbereich kann außerdem durch die Anordnung der Austrittsöffnungen für die Kunststoffschmelze zur Bildung des Schaumstoffkerns an einem für die Koextrusion verwendeten Extrusionswerkzeug weiter erhöht werden. Beispielsweise können am Rand des Extrusionswerkzeugs mehr oder größere Austrittsöffnungen für die Kunststoffschmelze zur Bildung des Schaumstoffkerns angeordnet sein, so dass im Randbereich des Hohlprofils, zusätzlich zur Begrenzung der Expansion des Schaumstoffkerns durch die Hohlprofilwand, eine größere Menge an Schaumstoffmaterial extrudiert wird.

Gemäß einem weiteren Aspekt der vorliegenden Erfindung, der mit den vorhergehenden Aspekten und beispielhaften Ausführungen kombinierbar ist, ist ein Fenster- und/oder Türteil, insbesondere ein Fenster- und/oder Türrahmenteil oder ein Fenster- und/oder Türflügelteil, bereitgestellt. Das Fenster- und/oder Türteil ist aus einem erfindungsgemäßen Koextrusionsprofil hergestellt. Insofern sind die in Bezug auf die erfindungsgemäßen Koextrusionsprofile gemachten Ausführungen und die damit verbundenen Merkmale und technischen Effekte auf erfindungsgemäße Fenster- und/oder Türteile übertragbar.

Gemäß einer beispielhaften Weiterbildung eines erfindungsgemäßen Fenster- und/oder Türteils ist das Fenster- und/oder Türteil durch Verschweißen, insbesondere auf Stoß oder durch Eckschweißen, zweier erfindungsgemäßer Koextrusionsprofile hergestellt. Dabei sind jeweils die Hohlprofilwände miteinander und die Schaumstoffkerne miteinander verschweißt. Dadurch ergibt sich eine höhere Festigkeit der Verbindung im Vergleich zu im Stand der Technik bekannten Extrusionsprofilen, bei denen nur die außenseitigen Profilwände verschweißt werden.

Gemäß einem weiteren Aspekt der vorliegenden Erfindung, der mit den vorhergehenden Aspekten und beispielhaften Ausführungen kombinierbar ist, ist ein Verfahren zum Herstellen eines Koextrusionsprofils für ein Fenster- und/oder Türteil, insbesondere ein Fenster- und/oder Türrahmenteil oder ein Fenster- und/oder Türflügelteil bereitgestellt. Das Verfahren kann derart ausgebildet sein, dass ein erfindungsgemäßes Koextrusionsprofil hergestellt wird.

Erfindungsgemäß werden ein Schaumstoffkern aus Kunststoff, beispielsweise aus PET, und ein, eine Außenseite des Koextrusionsprofils bildendes Hohlprofil mit einer Hohlprofilwand aus Kunststoff, beispielsweise aus PVC, so koextrudiert, dass das Kunststoffmaterial zur Bildung des Schaumstoffkerns innerhalb des Hohlprofils aufschäumt. Durch die Koextrusion von Schaumstoffkern und Hohlprofil geht eine besonders formgenaue Verbindung von Schaumstoffkern und Hohlprofil einher. Als Verbindung ist dabei nicht notwendigerweise eine stoffschlüssige Verbindung von Schaumstoffkern und Hohlprofil zu verstehen, sondern grundsätzlich eine Anordnung des Schaumstoffkerns innerhalb des Hohlprofils. Das Aufschäumen des Schaumstoffkerns innerhalb des Hohlprofils kann dazu führen, dass sich der Schaumstoffkern insbesondere formgenau und/oder formanpassend an die Innenseite des Hohlprofils anschmiegt. Beispielsweise kann das Aufschäumen des Schaumstoffkerns innerhalb des Hohlprofils so erfolgen, dass eine Relativbewegung von Schaumstoffkern und Hohlprofil quer zur Extrusionsrichtung von höchstens 1,5 mm, insbesondere von höchstens 1 mm oder von höchstens 0,5 mm, vorzugsweise ausgeschlossen ist, zugelassen ist. Beispielsweise kann die Koextrusion so eingestellt sein, insbesondere das Extrudieren des Hohlprofils und das Extrudieren des Schaumstoffkerns zu dessen Expansion so auf einander abgestimmt sein, dass wenigstens im Bereich der einander zugewandten Grenzflächen von Schaumstoffkern und Hohlprofil eine materialschlüssige Verbindung einhergeht. Ein Vorteil der Koextrusion besteht darin, dass es möglich ist, auf herstellungstechnisch einfache Art und Weise beliebige Profilquerschnitte herzustellen. Durch das Aufschäumen des Schaumstoffkern-Materials innerhalb des Hohlprofils ist es möglich, für beliebige Querschnitte der Hohlprofils einen Schaumstoffkern herzustellen. Es kann vorgesehen sein, dass das Kunststoffmaterial zur Bildung des Schaumstoffkerns gleichzeitig mit der Extrusion der Hohlprofilwand in das Hohlprofil extrudiert wird. Auf diese Weise können die Hohlprofilwand und der Schaumstoffkern gleichzeitig in einem Prozessschritt mittels Koextrusion hergestellt werden.

Um die Hohlprofilwand und den Schaumstoffkern im Inneren des Hohlprofils gleichzeitig zu erzeugen, kann aufgeschmolzenes Kunststoff-Granulat und/oder Kunststoff-Recyclat, beispielsweise PET, zur Bildung des Schaumstoffkerns während der Extrusion der Hohlprofilwand aus aufgeschmolzenem Kunststoff-Granulat und/oder Kunststoff-Recyclat, beispielsweise PVC, in das Hohlprofil eingeführt und dort aufgeschäumt werden. Bei der Koextrusion expandiert sich der Schaumstoffkern, beispielsweise durch thermische Expansion, und verbindet sich so bereits während der Herstellung mit der Hohlprofilwand. Vorzugsweise kann dafür dasselbe Extrusionswerkzeug verwendet werden. Das Extrusionswerkzeug kann dafür eine Austrittsöffnung für die Kunststoffschmelze zur Bildung der Hohlprofilwand und eine oder mehrere weitere Austrittsöffnungen für die Kunststoffschmelze zur Bildung des Schaumstoffkerns aufweisen.

Der Schaumstoffkern kann chemisch unter Hinzugabe von anorganischen Treibmitteln und Nukleierungsmitteln, wie zum Beispiel Talkum (H2Mg3O2Si4) mit einem Molekulargewicht von 397,27, Natriumbikarbonat (NaHCO3 / CHNaO3), auch als Natriumhydrogenkarbonat bezeichnet, mit einem Molekulargewicht von 84,007 und einer monoisotropen Masse von 83,98, oder Ammoniumkarbonat (CH8N2O3) aufgeschäumt werden. Das Natriumbikarbonat kann ein Mononatriumsalz der Kohlensäure mit alkalinisierenden Eigenschaften sein, das als kristallines Pulver oder in Agglomeraten verwendet werden kann. Die anorganischen Treibmittel und Nukleierungsmittel zersetzen sich bei Erhitzung im Extruder und setzen Gase frei, die das Aufschäumen des aufgeschmolzenen Kunststoffs ermöglichen. Beispielsweise Natriumbikarbonat zerfällt beim Erhitzen über 50 °C, wobei Co2, H2O und Na2Co3 freigesetzt werden, mit vollständiger Zersetzung bei 270 °C. Hierbei kann beispielsweise mit 4,4-Oxybis (Benzolsulfonylhyrazid) der Zerfall gesteuert werden. Ammoniumkarbonat kann in Pulverform eingesetzt werden und weist ein Molekulargewicht von 96,09 und eine monoisotrope Masse von 96,053 auf. Es zerfällt bei Erhitzung unter Bildung von Ammoniak und CO2. Alternativ oder zusätzlich kann 5-(1-Pentylterazol-5-yl)-Benzol-1,3-diamin (C12H18N6) mit einem Molekulargewicht von 246,31 verwendet werden. Alternativ oder zusätzlich zu den anorganischen Treibmitteln und Nukleierungsmitteln können organische Treibmittel und Nukleierungsmittel verwendet werden wie beispielsweise Azodicarbonamid ADC (C2N4H4O2) mit einem Synonym von Azodicaboxamid und Azobisformamid, einem Molekulargewicht von 116,08 und einer Zersetzungstemperatur von 225 °C. Alternativ oder zusätzlich zu den anorganischen und/oder organischen Treibmitteln und Nukleierungsmitteln kann auch physikalisch mittels hochkomprimierter Gase, wie beispielsweise CO₂ oder N₂ im Hochdruckverfahren oder Ethanol, Pentan, Butan im Niederdruckverfahren, aufgeschäumt werden. Des Weiteren ist es denkbar, den Schäumvorgang bei der Herstellung des Schaumstoffkerns mit sogenannten Microspheren durchzuführen, die als in Acrylat-Hohlkügelchen eingeschlossene leicht siedende Flüssigkeiten, wie IsoButan, -Pentan, -Oktan oder dergleichen, bezeichnet werden können und welche wie chemische Treibmittel direkt in das Kunststoff-Granulat oder Kunststoff-Recyclat dosiert werden können. Um das Schäumverhalten des Kunststoff-Granulats oder Kunststoff-Recyclats zu verbessern, den Zerfall bzw. das Platzen von Schaumblasen im Prozess zu reduzieren und ein extrusionsfähiges Verhalten der Kunststoffschmelze zu erzeugen, können Kettenverlängerungsmittel zur Steigerung der intrinsischen Viskosität der Kunststoffschmelze, sogenannte Chain-Extender, in den Extrusionsvorgang eingebracht werden. Als Chain-Extender können organische oder anorganische Zusätze oder Polymere verwendet werden. Als Chain-Extender kann beispielsweise Pyromellitic Dianhydride (PMDA), Diisocyanat, Diepoxid, 1,6-Diisocyanatohexan, 1,4-Butanediol Diglycidylether (EPOX), 1,4-Phenylene-Bis-Oxazoline (PBO), 1,4- Phenylene-Diisocyanat (PDI) und/oder Triphenyl-Phosphit (TPP) verwendet werden.

In einer beispielhaften Ausführung wird die Hohlprofilwand nach der Extrusion kalibriert, insbesondere trockenkalibriert. Die Kalibrierung, insbesondere Trockenkalibrierung, kann direkt an die Austrittsöffnung des Extrusionswerkzeugs für die Kunststoffschmelze zur Bildung der Hohlprofilwand anschließen. Die Kunststoffschmelze zur Bildung des Schaumstoffkerns kann in dieser Ausführung so in den Hohlraum des Hohlprofils eingeführt werden, dass die Kunststoffschmelze zur Bildung des Schaumstoffkerns innerhalb des kalibrierten Hohlprofilwandabschnitts aufschäumt.

In einer beispielhaften Weiterbildung wird die Hohlprofilwand bei der Kalibrierung, insbesondere bei der Trockenkalibrierung, gekühlt, so dass die Hohlprofilwand teilerstarrt. Es kann vorgesehen sein, dass die Hohlprofilwand bei der Kalibrierung, insbesondere Trockenkalibrierung, unter Vakuum gekühlt wird. Die Kalibrierung kann die gleiche Außenkontur wie die Austrittsöffnung des Extrusionswerkzeugs für die Kunststoffschmelze zur Bildung der Hohlprofilwand aufweisen, so dass die Kunststoffschmelze an der gesamten Oberfläche abgekühlt wird. Durch die Kühlung während der Kalibrierung kann gewährleistet werden, dass die heiße, expandierte Kunststoffschmelze zur Bildung des Schaumstoffkerns erst auf die Hohlprofilwand trifft, wenn diese bereits so weit abgekühlt und verfestigt ist, dass durch die Kunststoffschmelze keine Beeinträchtigungen, beispielsweise Deformationen, der Hohlprofilwand auftreten. Die Kunststoffschmelze zur Bildung des Schaumstoffkerns kann beim Austritt aus dem Extrusionswerkzeug beispielsweise eine Temperatur von etwa 250 °C aufweisen.

In einer weiteren beispielhaften Weiterbildung wird der Schaumstoff mittels einer Lanze in einen Hohlraum des Hohlprofils extrudiert. Die eine oder mehreren Austrittsöffnungen für die Kunststoffschmelze zur Bildung des Schaumstoffkerns können in dieser Ausführung am Ende der Lanze angebracht sein. Die Lanze kann außerdem so dimensioniert sein, dass die Kunststoffschmelze zur Bildung des Schaumstoffkerns innerhalb des kalibrierten Hohlprofilwandabschnitts aufschäumt. Die Kunststoffschmelze zur Bildung des Schaumstoffkerns kann also mithilfe der Lanze in einem bestimmten Abstand zur Austrittsöffnung des Extrusionswerkzeugs für die Kunststoffschmelze zur Bildung der Hohlprofilwand in das Hohlprofil eingeführt werden, um dort aufgeschäumt zu werden.

Gemäß einem weiteren Aspekt der vorliegenden Erfindung, der mit den vorhergehenden Aspekten und beispielhaften Ausführungen kombinierbar ist, ist ein Extrusionswerkzeug, insbesondere Koextrusionswerkzeug, zum Herstellen eines erfindungsgemäßen Koextrusionsprofils oder eines erfindungsgemäßen Fenster- und/oder Türteils und/oder zum Durchführen des erfindungsgemäßen Koextrusionsverfahrens bereitgestellt.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine beispielhafte Ausführung eines Tür- und/oder Fenstersystems mit erfindungsgemäßen Koextrusionsprofilen;
- Figur 2: eine weitere beispielhafte Ausführung eines Tür- und/oder Fenstersystems mit erfindungsgemäßen Koextrusionsprofilen;
- Figur 3: eine weitere beispielhafte Ausführung eines Tür- und/oder Fenstersystems mit erfindungsgemäßen Koextrusionsprofilen;
- Figur 4: eine weitere beispielhafte Ausführung eines Tür- und/oder Fenstersystems mit erfindungsgemäßen Koextrusionsprofilen;
- Figur 5: eine beispielhafte Ausführung eines erfindungsgemäßen Koextrusionsprofils mit mehreren Verankerungsvorprüngen an einer Innenseite der Hohlprofilwand;
- Figur 6: eine schematische Prinzipskizze zur Herstellung eines erfindungsgemäßen Koextrusionsprofils;
- Figur 7: eine beispielhafte Austrittsöffnung eines Extrusionswerkzeugs für die Kunststoffschmelze zur Bildung einer, eine Profilaußenseite eines erfindungsgemäßen Koextrusionsprofils bildenden Hohlprofilwand;
- Figur 8: eine beispielhafte Anordnung mehrerer Austrittsöffnungen eines Extrusionswerkzeugs zum Einführen der Kunststoffschmelze zur Bildung des Schaumstoffkerns in das Hohlprofil.

In der folgenden Beschreibung beispielhafter Ausführungen der vorliegenden Erfindung ist ein erfindungsgemäßes Koextrusionsprofil im Allgemeinen mit der Bezugsziffer 1 versehen, welches in Türen oder Fenstern, insbesondere in Tür- oder Fensterrahmen eingesetzt wird und beispielsweise ein Rahmenprofil, ein Flügelprofil, ein Verbreiterungsprofil eines Flügels oder eines Rahmens, ein Pfostenprofil, ein Stulpprofil, ein Stulpflügelprofil, ein Zargenprofil, beispielsweise bei Schiebetüren oder Schiebefenstern, oder ein Futterleistenprofil ist. Die Extrusionsrichtung E ist dabei in die Zeichenebene hinein orientiert.

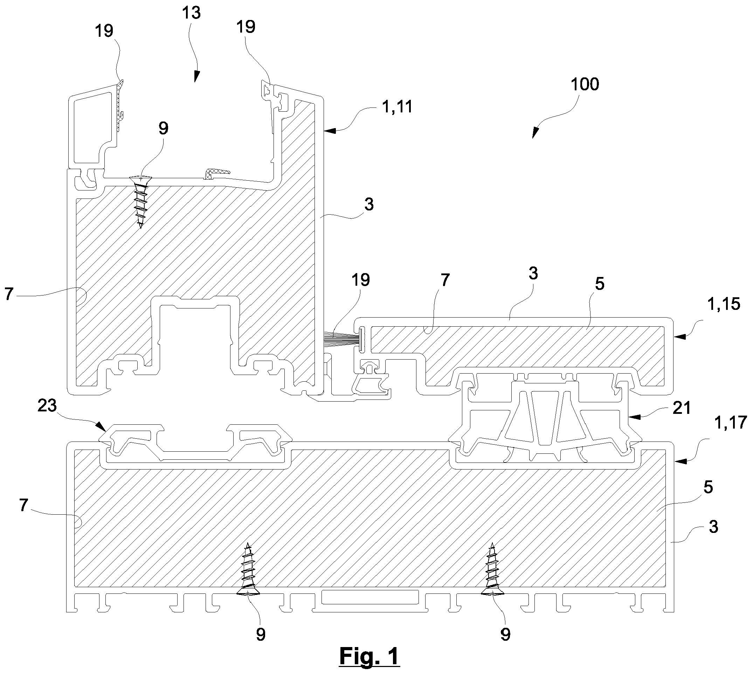

In den beispielhaften Ausführungen der Figuren 1 bis 4 sind die erfindungsgemäßen Koextrusionsprofile 1 Teil von Tür- oder Fenstersystemen, die im Allgemeinen mit der Bezugsziffer 100 versehen sind.

Erfindungsgemäße Koextrusionsprofile 1 umfassen im Wesentlichen die folgenden Hauptkomponenten: Ein, eine Außenseite des Koextrusionsprofils 1 bildendes Hohlprofil mit einer Hohlprofilwand 3 aus Kunststoff, beispielsweise PVC, und einen in dem Hohlprofil aufgeschäumten Schaumstoffkern 5 aus Kunststoff, beispielsweise PET, der bevorzugt eine Dichte im Bereich von 80 kg/m³ bis 250 kg/m³ aufweist. Die Koextrusionsprofile 1 sind frei von Hohlkammern bildenden Profilstegen oder Profilwänden, so dass die in Umfangsrichtung, also quer zur Extrusionsrichtung E betrachtet, geschlossene Hohlprofilwand 3 einen einzigen Hohlraum 7 begrenzt, der vollständig von dem Schaumstoffkern 5 belegt sein kann.

Die Hohlprofilwand 3 und der Schaumstoffkern 5 können mittels Koextrusion in einem Prozessschritt gleichzeitig, vorzugsweise mit demselben Extrusionswerkzeug, hergestellt werden. Erfindungsgemäß wird der Schaumstoffkern 5 innerhalb des Hohlprofils aufgeschäumt. Vorzugsweise wird der Schaumstoffkern 5 während der Extrusion der Hohlprofilwand 3 in das Hohlprofil extrudiert und dort aufgeschäumt. Durch eine beispielsweise temperaturabhängige Expansion des Schaumstoffkerns 5 werden bereits bei der Herstellung die Hohlprofilwand 3 und der Schaumstoffkern 5 kraftschlüssig aneinander befestigt. Somit können sich die Hohlprofilwand 3 und der Schaumstoffkern 5 nicht voneinander entfernen. Auf ein Verkleben oder anderweitiges stoffschlüssiges Verbinden sowie auf zusätzliche Schraubenlager, wie Metall-Versteifungsprofile, kann verzichtet werden.

Das in Figur 1 abgebildete Tür- und/oder Fenstersystem 100 weist drei erfindungsgemäß ausgebildete Koextrusionsprofile 1 auf, von denen eines als Flügelteil 11 mit einer Verglasungsnut 13 zum Aufnehmen einer nicht dargestellten Verglasung, eines als Futterleiste 15 und eines als Zarge 17 ausgebildet ist. Das Fenstersystem 100 umfasst ferner verschiedene Dichtungen, die vereinfacht mit dem Bezugszeichen 19 versehen sind, eine Adapterleiste 21, die aus Kunststoff, insbesondere PVC, insbesondere im Extrusionsverfahren hergestellt sein kann, sowie eine Führungsleiste 23 aus Kunststoff, insbesondere PVC, die ebenfalls im Extrusionsverfahren hergestellt sein kann.

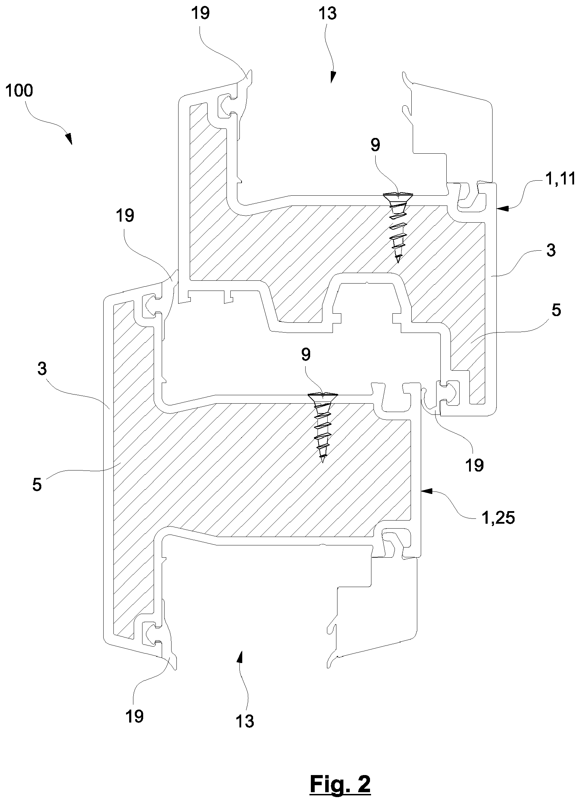

Gleiche Komponenten sind im Folgenden mit gleichen Bezugsziffern versehen. Das Tür- und/oder Fenstersystem 100 aus Figur 2 weist ein, ein Flügelprofil 11 bildendes Koextrusionsprofil 1 auf, dass mit einem als Pfostenprofil 25 ausgebildeten erfindungsgemäßen Koextrusionsprofil 1 kooperiert. Das Pfostenprofil 25 und das Flügelprofil 11 weisen jeweils eine Verglasungsnut 13 zum Aufnehmen einer nicht abgebildeten Verglasung auf.

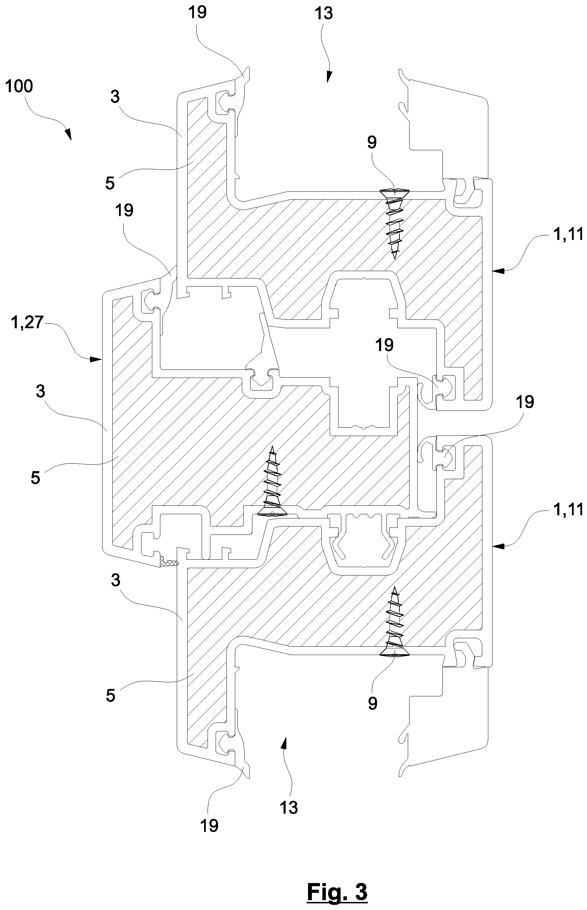

Das in Figur 3 abgebildete Tür- und/oder Fenstersystem 100 ist grundsätzlich ähnlich zu den vorhergehenden Tür- und/oder Fenstersystemen 100 aufgebaut und umfasst ein als Flügelprofil 11 ausgebildetes erfindungsgemäßes Koextrusionsprofil 1, welches über ein als Stulpprofil 27 ausgebildetes erfindungsgemäßes Koextrusionsprofil 1 mit einem weiteren erfindungsgemäßen Koextrusionsprofil 1, welches wiederum als Flügelprofil 11 ausgebildet ist, kooperiert.

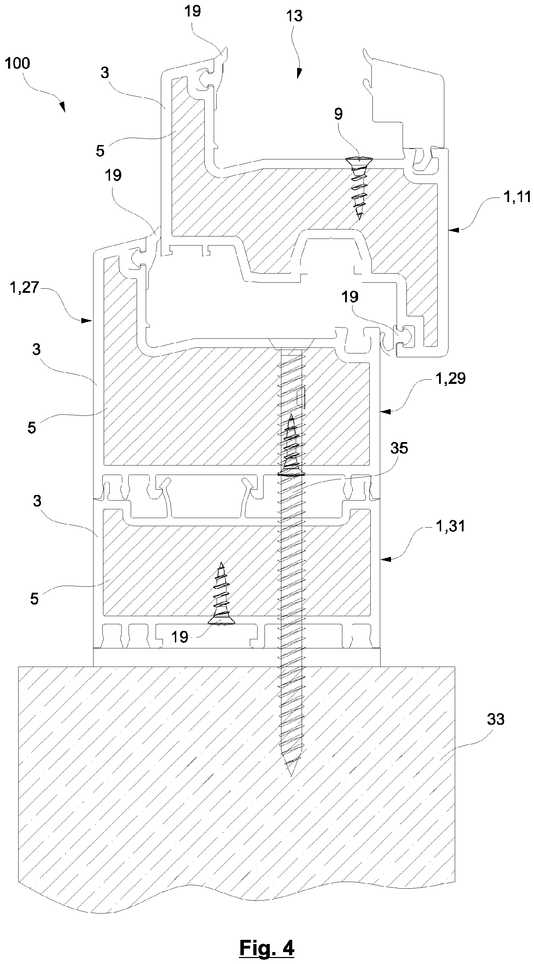

In Figur 4 ist eine weitere beispielhafte Ausführung eines Tür- und/oder Fenstersystems 100 aus mehreren erfindungsgemäßen Koextrusionsprofilen 1 abgebildet, das ein als Flügelprofil 11 ausgebildetes Koextrusionsprofil 1, ein als Rahmenprofil 29 ausgebildetes Koextrusionsprofil 1 sowie ein zusätzliches als Verbreiterungsprofil 31 ausgebildetes erfindungsgemäßes Koextrusionsprofil 1 umfasst. Das Tür- und/oder Fenstersystem 100 ist in Figur 4 in seinem Montagezustand an einem Bauträger 33, wie eine Gebäudewand, abgebildet. Über eine Verschraubung 35 sind das Rahmenprofil 29 und das Verbreiterungsprofil 31 mit dem Bauträger 33 verschraubt.

In den beispielhaften Ausführungen in den Figuren 1 bis 4 liegt der Schaumstoffkern 5 eines erfindungsgemäßen Koextrusionsprofils 1 jeweils flächenbündig, in Umfangsrichtung betrachtet vollständig an einer Innenseite der Hohlprofilwand 3 des erfindungsgemäßen Koextrusionsprofils 1 an und verkeilt sich durch eine beispielsweise temperaturabhängige Expansion während der Herstellung des Koextrusionsprofils 1 mit der Hohlprofilwand 3. Auf diese Weise kann eine ausreichende Halte- und Befestigungskraft zwischen dem Schaumstoffkern 5 und der Hohlprofilwand 3 sichergestellt werden. Durch die Begrenzung der Expansion des Schaumstoffkerns 5 durch die Hohlprofilwand 3 nimmt die Dichte des Schaumstoffkerns 5 von dessen Zentrum nach außen kontinuierlich zu, es besteht also ein Dichtegradient von innen nach außen.

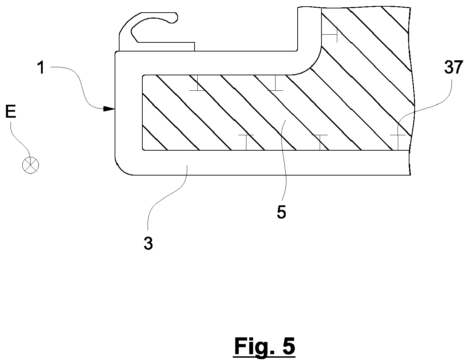

In der Ausführung eines erfindungsgemäßen Koextrusionsprofils 1 in Figur 5 weist die Hohlprofilwand 3 an einer Innenseite mehrere sich in Extrusionsrichtung E erstreckende Verankerungsvorsprünge 37 auf. Die Verankerungsvorsprünge 37 ragen ins Innere des Hohlprofils hinein und sind vorzugsweise vollständig vom Schaumstoffkern 5 umschäumt. Die Verankerungsvorsprünge 37 haben einen T-förmigen Querschnitt, so dass sie widerhakenartig in dem Schaumstoffkern 5 verankert sind. Dadurch kann die Kraftübertragung zwischen dem Schaumstoffkern 5 und der Hohlprofilwand 3 verbessert werden, indem der Kontaktbereich zwischen dem Schaumstoffkern 5 und der Hohlprofilwand 3 erhöht wird. Auf diese Weise kann die strukturelle Festigkeit der Verbindung im Vergleich zu den Ausführungen in den Figuren 1 bis 4 weiter verbessert werden.

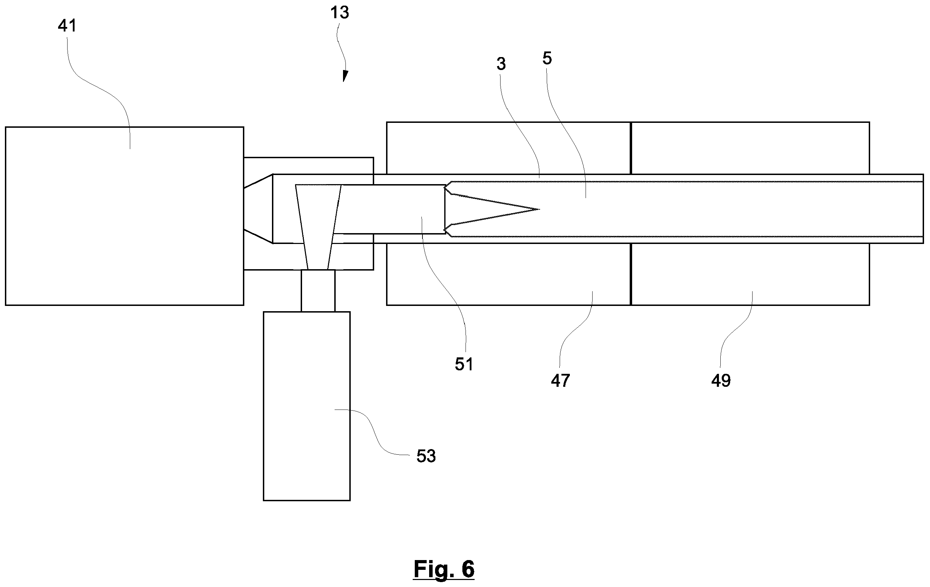

Unter Bezugnahme auf die Figuren 6 bis 8 werden im Folgenden ein beispielhafter Fertigungsablauf und ein beispielhaftes Extrusionswerkzeug 45 zum Herstellen eines erfindungsgemäßes Koextrusionsprofils 1 im Detail erläutert.

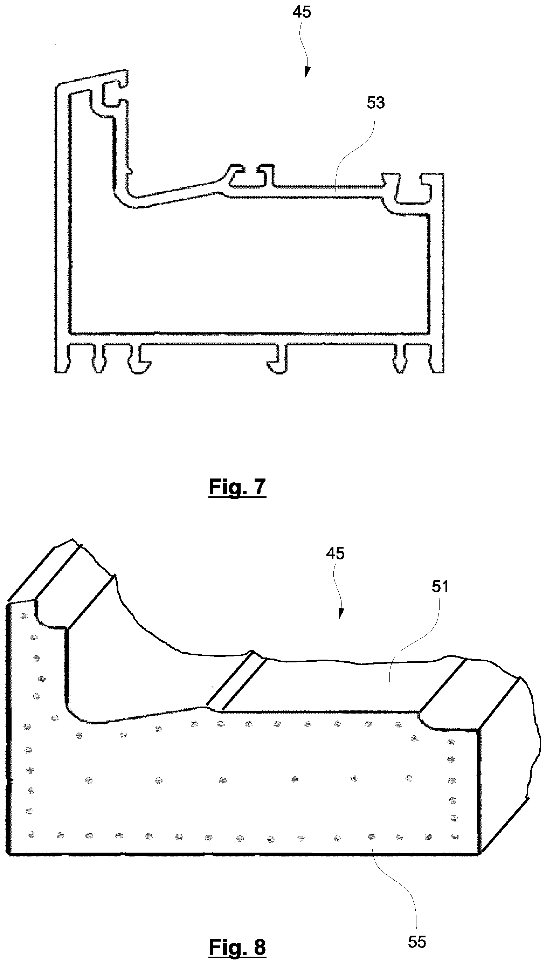

Figur 6 zeigt ein Ausführungsbeispiel einer Herstellungsvorrichtung 39 zum Herstellen erfindungsgemäßer Koextrusionsprofile 1. Die Herstellungsvorrichtung 39 umfasst einen Extruder 41 für Kunststoff-Granulat, Kunststoff-Dryblend oder Kunststoff-Recyclat, beispielsweise PVC, zur Bildung der Hohlprofilwand 3 und einen Extruder 43 für Kunststoff-Granulat oder Kunststoff-Recyclat, beispielsweise PET, unter optionaler Zugabe von chemischen Treibmitteln und/oder einer Nukleierung zur Bildung des Schaumstoffkerns 5. Die Herstellungsvorrichtung 39 umfasst außerdem ein Extrusionswerkzeug 45, das unter Bezugnahme auf Figur 7 und Figur 8 näher erläutert wird, mit dem sowohl die Hohlprofilwand 3 als auch der Schaumstoffkern 5 mittels Koextrusion in einem Prozessschritt gleichzeitig extrudiert werden können. Dafür weist das Extrusionswerkezug 45 eine Austrittsöffnung für die Kunststoffschmelze zur Bildung der Hohlprofilwand 3 und eine oder mehrere weitere Austrittsöffnungen für die Kunststoffschmelze zur Bildung des Schaumstoffkerns 5 auf.

An das Extrusionswerkzeug 45 schließt eine Trockenkalibrierung 47 an, in der die extrudierte Hohlprofilwand 3, insbesondere unter Vakuum, abgekühlt wird und teilerstarrt. Die Trockenkalibrierung 47 kann die gleiche Außenkontur wie eine Austrittsöffnung 53 (siehe Figur 7) für die Kunststoffschmelze zur Bildung der Hohlprofilwand 3 am Extrusionswerkzeug 45 aufweisen, so dass die Kunststoffschmelze an der gesamten Oberfläche gekühlt wird. An die Trockenkalibrierung 47 kann eine Nasskalibrierung 49 anschließen.

Erfindungsgemäß wird die Kunststoffschmelze zur Bildung des Schaumstoffkerns 5 innerhalb des Hohlprofils aufgeschäumt. Dafür kann der Kunststoffschmelze zur Bildung des Schaumstoffkerns 5 ein physikalisches Treibmittel, wie CO2, N2, Propan, oder Butan, beigemischt werden. Bevorzugt wird die Kunststoffschmelze zur Bildung des Schaumstoffkerns 5 mit einer Lanze 51 innerhalb der Trockenkalibrierung 47, also in einem bestimmten Abstand zur Austrittsöffnung 53 für die Kunststoffschmelze zur Bildung der Hohlprofilwand 3, in das Hohlprofil eingeführt und dort aufgeschäumt. Dadurch kann gewährleistet werden, dass die heiße, expandierte Kunststoffschmelze zur Bildung des Schaumstoffkerns 5 erst auf die Hohlprofilwand 3 trifft, wenn diese bereits so weit abgekühlt und verfestigt ist, dass durch die Kunststoffschmelze keine Beeinträchtigungen, beispielsweise Deformationen, der Hohlprofilwand 3 entstehen.

Figur 7 zeigt eine beispielhafte Austrittsöffnung 53 für die Kunststoffschmelze zur Bildung der Hohlprofilwand 3. Wenn zusätzlich Verankerungsvorsprünge 37, wie in Figur 5, an einer Innenseite der Hohlprofilwand 3 vorgesehen sind, kann die Austrittsöffnung 53 für die Kunststoffschmelze zur Bildung der Hohlprofilwand 3 angepasst werden, so dass die Verankerungsvorsprünge 37 zusammen mit der Hohlprofilwand 3 extrudiert werden können und keine zusätzlichen Fertigungs- oder Bearbeitungsschritte nötig sind.

Figur 8 zeigt eine beispielhafte Anordnung mehrerer Austrittsöffnungen 55 für die Kunststoffschmelze zur Bildung des Schaumstoffkerns 5. Die Austrittsöffnungen 55 können am Ende einer, an die Form der Austrittsöffnung 53 für die Kunststoffschmelze zur Bildung der Hohlprofilwand 3 angepassten, Lanze 51 zum Einführen der Kunststoffschmelze zur Bildung des Schaumstoffkerns 5 in das Hohlprofil angeordnet sein. In Figur 8 ist zu erkennen, dass in der Mitte der Lanze 51 weniger Austrittsöffnungen 55 vorgesehen sind als am Rand der Lanze 51. Auf diese Weise kann die randnahe höhere Dichte des Schaumstoffkerns 5 weiter erhöht werden, indem zusätzlich zu der Begrenzung der Expansion des Schaumstoffkerns 5 durch die Hohlprofilwand 3 im Randbereich mehr Kunststoffschmelze zur Bildung des Schaumstoffkerns 5 in das Hohlprofil extrudiert wird.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Koextrusionsprofil
- 3: Hohlprofilwand
- 5: Schaumstoffkern
- 7: Hohlraum
- 9: Schraube
- 11: Flügelprofil
- 13: Verglasungsnut
- 15: Futterleistenprofil
- 17: Zargenprofil
- 19: Dichtung
- 21: Adapterleiste
- 23: Führungsleiste
- 25: Pfostenprofil
- 27: Stulpprofil
- 29: Rahmenprofil
- 31: Verbreiterungsprofil
- 33: Bauträger
- 35: Schraube
- 37: Verankerungsvorprung
- 39: Herstellungsvorrichtung
- 41: Extruder für die Kunststoffschmelze zur Bildung der Hohlprofilwand
- 43: Extruder für die Kunststoffschmelze zur Bildung des Schaumstoffkerns
- 45: Extrusionswerkzeug
- 47: Trockenkalibrierung
- 49: Nasskalibrierung
- 51: Lanze
- 53: Austrittsöffnung für Kunststoffschmelze zur Bildung der Hohlprofilwand
- 55: Austrittsöffnungen für Kunststoffschmelze zur Bildung des Schaumstoffkerns
- E: Extrusionsrichtung

## Patentansprüche

1. Koextrusionsprofil (1) für ein Fenster- und/oder Türteil, insbesondere ein Fenster- und/oder Türrahmenteil, ein Fenster- und/oder Türflügelteil, beispielsweise ein Schiebefenster oder eine Schiebetür, oder ein an ein Fenster- und/oder Türteil anzubringendes Nebenprofil, umfassend ein, eine Außenseite des Koextrusionsprofils (1) bildendes Hohlprofil mit einer Hohlprofilwand (3) aus Kunststoff und einen in dem Hohlprofil aufgeschäumten Schaumstoffkern (5) aus Kunststoff.

2. Koextrusionsprofil (1) nach Anspruch 1, wobei der Schaumstoffkern (5) das Hohlprofil im Wesentlichen vollständig ausschäumt und/oder das Hohlprofil frei von Hohlkammern bildenden Innenstegen ausgebildet ist.

3. Koextrusionsprofil (1) nach einem der vorstehenden Ansprüche, wobei sich der Schaumstoffkern (5) derart beim Aufschäumen expandiert, dass er fest an der Hohlprofilwand (3) anliegt und/oder kraftschlüssig daran befestigt ist, wobei insbesondere sich der Schaumstoffkern (5) mit der Hohlprofilwand (3) verkeilt.

4. Koextrusionsprofil (1) nach einem der vorstehenden Ansprüche, wobei von einer Innenseite der Hohlprofilwand (3) wenigstens eine sich in Extrusionsrichtung erstreckende Rippe vorsteht, die von dem Schaumstoffkern (5) umschäumt ist.

5. Koextrusionsprofil (1) nach einem der vorstehenden Ansprüche, wobei an einer Innenseite der Hohlprofilwand (3) wenigstens ein sich in Extrusionsrichtung erstreckender Verankerungsvorsprung und/oder eine sich in Extrusionsrichtung erstreckende Verankerungsvertiefung ausgebildet ist/sind, der/die von der Innenseite vorsteht und widerhakenartig in dem Schaumstoffkern (5) verankert ist/sind.

6. Koextrusionsprofil (1) nach Anspruch 5, wobei der Verankerungsvorsprung und/oder die Verankerungsvertiefung einen C-, T- oder L-förmigen Querschnitt aufweist und/oder der Verankerungsvorsprung vollständig von dem Schaumstoffkern (5) umschäumt ist und/oder die Verankerungsvertiefung vollständig von dem Schaumstoffkern (5) ausgeschäumt ist.

7. Koextrusionsprofil (1) nach einem der vorstehenden Ansprüche, wobei die Hohlprofilwand (3) PVC umfasst und/oder eine Wandstärke im Bereich von 0,2mm bis 6mm, insbesondere im Bereich von 0,3mm bis 5mm oder im Bereich von 0,4mm bis 4mm, aufweist.

8. Koextrusionsprofil (1) nach einem der vorstehenden Ansprüche, wobei der Schaumstoffkern (5) aus einem Kunststoff mit einer mittleren Dichte im Bereich von 80 kg/m³ bis 250 kg/m³, insbesondere im Bereich von 100 kg/m³ bis 200 kg/m³, im Bereich von 110 kg/m³ bis 150 kg/m³, im Bereich von 110 kg/m³ bis 130 kg/m³ oder von etwa 115 kg/m³, beispielsweise aus PET, hergestellt ist.

9. Koextrusionsprofil (1) nach einem der vorstehenden Ansprüche, wobei der Kunststoff der Hohlprofilwand (3) und/oder des Schaumstoffkerns (5) Kunststoff-Recyclingmaterial umfasst, wobei insbesondere Kunststoff-Recyclingmaterial ein Gemisch ist, welches ein Alt-Fenster-Granulat oder -Mahlgut beispielsweise aus Produktionsabfällen der Fenster- und/oder Profilproduktion umfasst, wobei das Alt-Fenster-Granulat oder -Mahlgut einen Masseanteil zwischen 50 Gew.-% und 100 Gew.-% des Gemisches, insbesondere zwischen 80 Gew.-% und 98 Gew.-% des Gemisches, zwischen 90 Gew.-% und 97 Gew.-% des Gemisches oder etwa 95 Gew.-% des Gemisches, aufweist.

10. Koextrusionsprofil (1) nach einem der vorstehenden Ansprüche, wobei die Dichte des Kunststoffs des Schaumstoffkerns (5) von dessen Zentrum nach außen kontinuierlich zunimmt, wobei insbesondere die randnahe Dichte wenigstens doppelt, insbesondere dreimal, viermal oder fünfmal, so groß ist wie die Dichte im Bereich des Zentrums.

11. Fenster- und/oder Türteil, insbesondere Fenster- und/oder Türrahmenteil oder Fenster- und/oder Türflügelteil, das aus einem Koextrusionsprofil (1) gemäß einem der vorstehenden Ansprüche hergestellt ist.

12. Fenster- und/oder Türteil nach Anspruch 11, das durch Verschweißen, insbesondere auf Stoß oder durch Eckverschweißen, zweier nach einem der Ansprüche 1 bis 10 ausgebildeten Koextrusionsprofile (1) hergestellt ist, wobei jeweils die Hohlprofilwände (3) miteinander und die Schaumstoffkerne (5) miteinander verschweißt sind.

13. Extrusionsverfahren zum Herstellen eines insbesondere nach einem der Ansprüche 1 bis 10 ausgebildeten Koextrusionsprofils (1) für ein Fenster- und/oder Türteil, insbesondere ein Fenster- und/oder Türrahmenteil oder ein Fenster- und/oder Türflügelteil, bei dem ein Schaumstoffkern (5) aus Kunststoff und ein, eine Außenseite des Koextrusionsprofils (1) bildendes Hohlprofil mit einer Hohlprofilwand (3) aus Kunststoff so koextrudiert werden, dass der Schaumstoff zur Bildung des Schaumstoffkerns (5) innerhalb des Hohlprofils aufschäumt.

14. Extrusionsverfahren nach Anspruch 13, bei dem die Hohlprofilwand (3) nach der Extrusion kalibriert, insbesondere trockenkalibriert, wird und der Schaumstoff so in den Hohlraum (7) der Hohlprofilwand (3) extrudiert wird, dass der Schaumstoff zur Bildung des Schaumstoffkerns (5) innerhalb des kalibrierten Hohlprofilwandabschnitts aufschäumt.

15. Extrusionsverfahren nach Anspruch 14, bei dem die Hohlprofilwand (3) bei der Kalibrierung (47) insbesondere unter Vakuum gekühlt wird und teilerstarrt.

16. Extrusionsverfahren nach einem der Ansprüche 13 bis 15, bei dem der Schaumstoff mittels einer Lanze (51) in einen Hohlraum (7) des Hohlprofils extrudiert wird.

17. Extrusionswerkzeug (45) zum Herstellen eines nach einem der Ansprüche 1 bis 10 ausgebildeten Koextrusionsprofils (1) oder eines nach Anspruch 11 oder 12 ausgebildeten Fenster- und/oder Türteils und/oder zum Durchführen des Extrusionsverfahrens nach einem der Ansprüche 13 bis 16.
